Europäisches Patentamt

European Patent Office

Office européen des brevets

(19)

(11) Publication number : **0 333 953 B1**

# EUROPEAN PATENT SPECIFICATION

(12)

(45) Date of publication of patent specification :
15.01.92 Bulletin 92/03

(51) Int. Cl.$^5$ : **F16B 5/00**

(21) Application number : **88309043.3**

(22) Date of filing : **29.09.88**

(54) **Multiple sleeve-nut anchor plate.**

(30) Priority : **21.03.88 US 170895**

(43) Date of publication of application :
**27.09.89 Bulletin 89/39**

(45) Publication of the grant of the patent :
**15.01.92 Bulletin 92/03**

(84) Designated Contracting States :
**BE DE ES FR GB IT SE**

(56) References cited :
**GB-A- 1 550 814**

(73) Proprietor : **CALIFORNIA INDUSTRIAL
PRODUCTS, INC.
11525, South Shoemaker Road
Santa Fe Springs California 90670 (US)**

(72) Inventor : **Derby, Raymond C.
1847, North El Travesia La Habra
California 90631 (US)**

(74) Representative : **Brereton, Paul Arthur et al
REDDIE & GROSE 16 Theobalds Road
London WC1X 8PL (GB)**

## Description

The present invention pertains generally to an anchor plate having unitarily arranged therewith a plurality of nut means, and, more particularly, to an improved anchor plate having a plurality of sleeves formed by a progressive die from the plate material each of which are provided with roll-formed threads to receive a bolt.

There are many situations, such as encountered in the manufacture of automobiles, for example, where it is necessary or advisable to mount apparatus onto a previously constructed member by bolts or machine screws without forming openings in the member which could weaken it, or where the member thickness is insufficient to accommodate enough threads for achieving a reliably strong threaded connection. For example, the doors of an automobile of necessity must be securely and reliably affixed to the vehicle body ; however, the body material is not substantial enough by itself for the doors to be bolted directly to the body without additional reinforcement of some kind.

In the past, this problem has been met by using a so-called anchor plate secured to the member (e.g., automobile body). These prior anchor plates have been constructed of metal of sufficient thickness that holes formed therein are deep enough to include the necessary number of threads to securely retain a bolt. These anchor plate "nut" threads are typically formed through use of a self-tapping bolt necessitating a softer plate material.

All in all, the heaviness of this known prior anchor plates and the need for relatively expensive self-tapping bolts have made this approach less than fully satisfactory.

A further prior art anchor plate consists of the required number of conventional threaded nuts (hexagonal, circular) spot welded to a metal backing plate. A frequently encountered difficulty with this kind of anchor plate is a weld failure which allows the nut to rotate preventing tightening of a bolt therein with a poor assembly as a result.

In the practice of the present invention, there is provided a multi-sleeve nut or anchor plate formed from a flat metal blank. More particularly, a relatively thin blank of a medium hard steel is successively acted upon by a progressive draw die to form the desired number of sleeves extending transversely from one surface of the blank. A set of threads are roll formed in each sleeve and the final assembly is hardened providing an improved anchor plate that is lighter and stronger than prior known anchor plates. Still further, the outer ends of each sleeve are rolled inwardly a slight amount which provides a "prevailing torque" against removal of a bolt received therein.

The invention will be further described with reference to the accompanying drawings, in which :

Figure 1a is a perspective view of a known anchor plate and Figure 1b is a sectional view taken along the line 1b--1b ;

Figure 2 is a perspective view of another known anchor plate

Figure 3 is a perspective view of an anchor plate according to the present invention ;

Figure 4 is a further perspective view of the anchor plate and viewed from the side opposite to that shown in Figure 3 ; and

Figure 5 is a section along the line 5-5 of Figure 3.

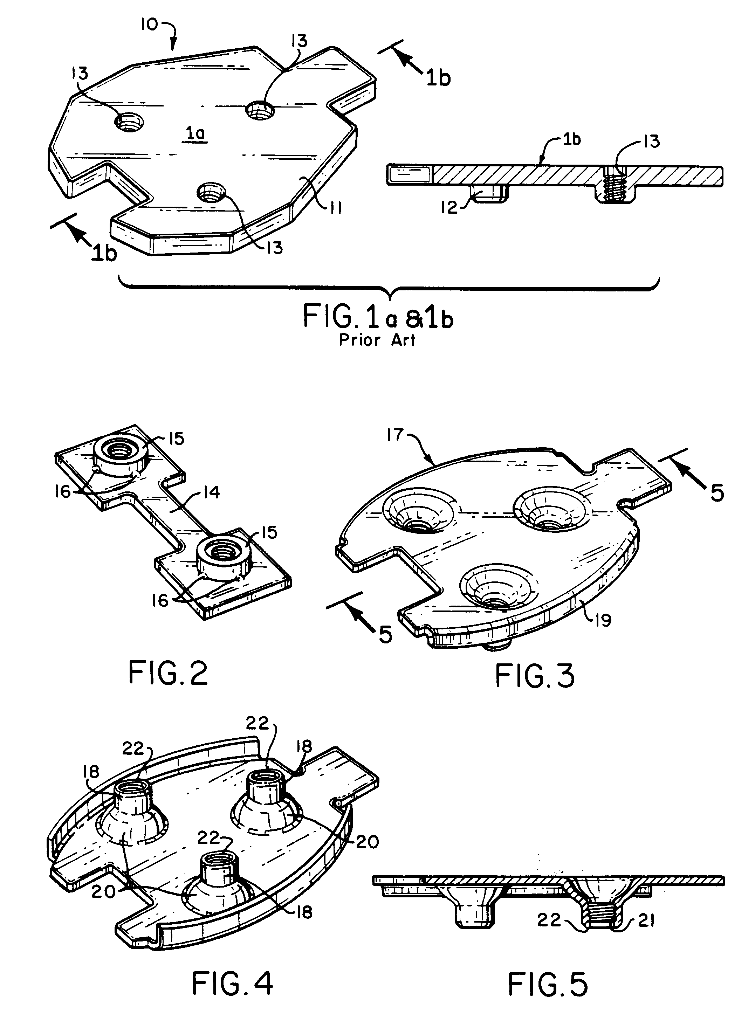

Figure 1, shows a known anchor plate 10. This plate includes a one-piece base member 11 with a plurality of generally cylindrical wall extrusions 12 formed around openings 13 for threadably receiving bolts therein. The openings 13 are formed either by punching, or a small hole was initially drilled followed by punching to the final condition. In both cases the punching displaces metal surrounding the opening outwardly to form the extrusion.

The material from which the plate is constructed is a rather soft, low carbon steel which is not heat treatable. To function properly, the metal has to be relatively thick so that the number of threads which can be formed in a plate opening (and the associated extrusion) will be sufficient to reliably hold a bolt.

The disadvantage of this form of known anchor plates are several. Firstly, they are excessively heavy due to the thickness required to provide a satisfactory number of turns of threads. Secondly, self-tapping bolts are used in assembly which are more costly than conventional bolts. Thirdly, even though a relatively thick metal plate 11 is used to provide the necessary number of turns of threads, the softer the metal results in greater frequency of "pullout" than is desirable. Lastly, the heavy metal sections in which the threads are formed make it difficult to provide a prevailing torque feature to the sleeve nuts.

In Figure 2 there is shown another known anchor plate consisting of a flat plate 14 having openings therein and conventional nuts 15 which are spot welded at 16 to the plate with each nut opening aligned with a plate opening. A persistent problem with these anchor plates is that the welds 16, which are typically formed by resistance welding, fail permitting the nuts to rotate when a bolt is being threaded therein producing an unsatisfactory assembly.

Turning now to Figure 3, an anchor plate 17 in accordance with the present invention, is made from a relatively thin blank of material having substantial hardness as compared with the device of Figure 1. More particularly, practical constructions of this anchor plate were made from 1050 carbon steel having a Rockwell "C" hardness in a range of 40 to 50. This steel is heat treatable and when it contains threads, formed in a manner to be described, they are substantially stronger than in the Figure 1 device.

Also, in view of the strength of the material an overall much thinner and therefore lighter construction can be realized. For example, an anchor plate of the invention constructed from a blank approximately 0.062 inches thick has strength in use exceeding that of a Figure 1 device fabricated from a blank 0.187 inches thick.

In construction, the metal blank is treated by a progressive draw die (not shown) in which a plurality of cylindrical sleeve 18 are formed extending transversely from one major surface of the blank. Use of a progressive draw die enables production of a longer sleeve than can be effected by the more conventional punched extrusion technique of the Fig. 1 prior art device. The blank edges also can be rolled up to form one or more flanges 19 for enhancing overall strength and ensuring dimensional integrity of the plate. In a practical embodiment fabricated from a 1/16 inch (1.6 mm) blank, a threadable sleeve exceeding 1/4 inches (6.3 mm) has been obtained. The outer end portions of the sleeves 18 are essentially cylindrical, however, they integrally join to the plate via a larger diameter conical portion 20.

Next, the sleeves 18 have threads 21 roll-formed along the sleeve bore inner surface. Roll forming is preferable since it can be accomplished on a thinner wall sleeve than can threads formed with a conventional tap or a self-tapping bolt. Also, roll forming does not produce chips or burrs which must then be removed.

At the conclusion of thread formation, the outer end 22 of each sleeve 18 is rolled radially inwardly a slight amount causing the first few turns of the thread to be slightly out of round, and, therefore, radially undersize as compared to the remaining threads. This results in a continuous gripping force on a bolt received therein even after the bolt has been threaded and unthreaded in the sleeve a number of times. This physical characteristics is referred to herein as "prevailing torque".

The final step is hardening the threaded plate to produce a final anchor plate which is lighter, stronger and whose sleeve "nuts" more reliably retain bolts threaded therein. Moreover, as a result of the prevailing torque the bolt does not work loose despite shocks and vibrations for extended periods.

## Claims

1. An anchor plate comprising a blank plate and a plurality of open-ended screw threaded sleeves attached to the plate and extending from the same major surface of the plate, characterised in that the blank plate (17) is constructed of a metal having a hardness in the range of 40 to 50 Rockwell "C", the sleeves (18) draw die formed from the plate and have cylindrical outer end portions with outwardly tapering portions (20) integrally connected to the plate ; and threads (21) are roll-formed on the inner wall of each sleeve (18), the plate being hardened after the threads (21) are formed.

2. An anchor plate as in claim 1, characterised in that the portions of the blank plate (17) are bent transversely of the plate to form flanges (19).

3. Method of making an anchor plate for threaded receipt of a plurality of bolts therein, characterised by the steps of :

    progressive draw die forming a metal blank to form a plurality of cylindrical sleeves extending from the same major surface of the blank ;
    roll forming threads on the cylindrical sleeves inner wall surfaces ; and
    hardening the blank with threaded sleeves to a hardness in the range of 40 to 50 Rockwell "C".

4. Method as in claim 3, including the further step of bending metal blank edge portions to form flanges prior to blank hardening.

## Patentansprüche

1. Ankerplatte mit einer Platte aus Vollmaterial und mehreren am Ende offenen Schraubgewindehülsen, die an der Platte befestigt sind und sich von der gleichen Hauptfläche der Platte erstrecken, dadurch **gekennzeichnet**, daß die Platte (17) aus Metall mit einer Härte im Bereich von 40 bis 50 Rockwell "C" gefertigt ist, die Hülsen (18) aus der Platte mittels Gesenk gezogen sind und zylindrische äußere Endabschnitte mit sich nach außen erweiternden Bereichen (20) aufweisen, die einstückig mit der Platte verbunden sind ; und
Gewinde (21) in die Innenwand jeder Hülse (18) gewalzt sind, wobei die Platte gehärtet wird, nachdem die Gewinde (21) gebildet sind.

2. Ankerplatte nach Anspruch 1, dadurch **gekennzeichnet**, daß die Abschnitte der Platte (17) zum Bilden von Rändern (19) quer zur Platte gebogen sind.

3. Verfahren zum Herstellen einer Ankerplatte zur Aufnahme mehrerer Schrauben, **gekennzeichnet** durch die Schritte :

    allmähliches Ziehen einer Metallplatte aus Vollmatemittels Gesenk zum Bilden mehrerer zylindrischer Hülsen, die sich von der gleichen Hauptfläche der Platte erstrecken ;
    Walzen von Gewinden in die Innenwandoberflächen der zylindrischen Hülsen ; und
    Härten der Platte mit Schraubgewindehülsen bis zu einer Härte im Bereich von 40 bis 50 Rockwell "C".

4. Verfahren nach Anspruch 3, mit dem weiteren Schritt des Biegens von Randabschnitten der Metallplatte zum Bilden von Rändern vor der Plattenhärtung.

**Revendications**

1. Plaque d'ancrage constituée d'une plaque servant d'ébauche et d'une pluralité de manchons taraudés, à extrémité ouverte, fixés à la plaque et s'étendant depuis la même surface principale de la plaque, plaque caractérisée par le fait que la plaque d'ébauche (17) est construite en un métal présentant une dureté Rockwell "C" de 40 à 50, par le fait que les manchons (18) sont formés au moyen d'une filière à partir de la plaque et présentent des portions d'extrémité extérieures cylindriques avec des portions (20) allant extérieurement en cône et solidairement reliées à la plaque ; et
par le fait que les filets (21) sont formés par roulage sur la paroi intérieure de chaque manchon (8), la plaque étant traitée thermiquement après que les filets (21) y sont formés.

2. Plaque d'ancrage selon la revendication 1, caractérisée par le fait que les portions de la plaque d'ébauche (17) sont repliées transversalement par rapport à la plaque pour former les rebords (19).

3. Procédé de fabrication de plaque d'ancrage pour y recevoir, par vissage, une pluralité de vis, procédé caractérisé par les étapes consistant à :
former une ébauche métallique au moyen d'une filière progressive pour y former une pluralité de manchons cylindriques s'étendant depuis la même surface principale de l'ébauche ;
former par roulage des filets de vis sur les surfaces de la paroi intérieure des manchons cylindriques ; et
traiter thermiquement l'ébauche présentant les manchons taraudés pour obtenir une dureté comprise entre 40 et 50 Rockwell "C"

4. Procédé selon la revendication 3, incluant l'étape complémentaire consistant à replier les portions de bordure de l'ébauche métallique pour former les rebords avant le traitement thermique de l'ébauche.

FIG.1a &1b
Prior Art

FIG.2

FIG.3

FIG.4

FIG.5